# EUROPÄISCHE PATENTANMELDUNG

(11) **EP 2 012 172 A1**
(43) Veröffentlichungstag der Anmeldung: **07.01.2009**
(21) Anmeldenummer: 08012068.6
(22) Anmeldetag: 03.07.2008
(51) Int. Cl.: G02C 11/00, G02C 5/14, G02C 3/04

(54) **Clip für Brillen**

(30) Priorität: 03.07.2007 DE 202007009346 U; 31.07.2007 DE 202007010642 U; 11.08.2007 DE 202007011090 U; 05.02.2008 DE 202008001660 U
(71) Anmelder: Kreutz, Karl-Jürgen, 80805 München (DE)
(72) Erfinder: Kreutz, Karl-Jürgen, 80805 München (DE)
(74) Vertreter: Borchert, Uwe Rudolf

(57) **Zusammenfassung**

Die Erfindung betrifft Clips, vorzugsweise für Brillen, mit einem sich über einen der beiden Brillenbügel erstreckenden Federschenkel und einem den Brillenbügel umfassenden Klemmorgan. Der Clip soll möglichst einfach und damit leicht herstellbar und leicht vom Benutzer ohne Werkzeug fest und sicher anbringbar sein. Dies wird vorzugsweise dadurch erreicht, dass das Klemmorgan im Wesentlichen aus zwei zusammenschiebbaren Profilstücken besteht, zwischen deren einander zugekehrten Innenflächen ein Brillenbügel aufnehmbar ist, dass an dem einen Profilstück wenigstens eine Führungsleiste (4a, 4b) und an dem anderen Profilstück wenigstens eine die Führungsleiste untergreifende Klemmleiste (1f, 1g) vorgesehen sind, und dass die Anlagefläche zwischen der Führungsleiste (4a, 4b) und der Klemmleiste (1f, 1g) gegenüber der Längsrichtung wenigstens einer der beiden Innenflächen unter einen Keilwinkel α geneigt ist.

## Beschreibung

Die Erfindung betrifft Clips, vorzugsweise für Brillen, mit einem sich über einen der beiden Brillenbügel erstreckenden Federschenkel und einem den Brillenbügel umfassenden Klemmorgan.

Solche Clips sind bereits aus DE 42 40 162 A1 bekannt. Dabei sind der Federschenkel und das Klemmorgan einstückig aus einem in sich federnden Material in Form eines U-Bügels mit ungleich langen Schenkeln gefertigt, wobei der kürzere Schenkel am Brillenbügel befestigt ist. Die Befestigung mit Schrauben oder Nieten ist umständlich, es müssen Löcher am Brillenbügel gebohrt werden. Nach einer anderen Ausführung ist der Clip mittels biegbarer oder federnder Klammern an einem Brillenbügel zu befestigen. Solche Klammern sind schwierig am Brillenbügel anzubringen, um so schwieriger je weiter und fester sie den Bügel umfassen sollen. Auch ist diese Raumform kompliziert und daher schwierig herzustellen.

Der Erfindung liegt daher die Aufgabe zugrunde, Clips dieser Art zu schaffen, die eine möglichst einfache Raumform aufweisen und damit leicht herstellbar und leicht vom Benutzer an seiner Brille ohne Werkzeug fest und sicher anbringbar sind und zwar auch an zierlichen Brillen mit nur etwa 3 mm * 1,5 mm Querschnitt des Brillenbügels, dabei soll ein und derselbe Clip an - in Grenzen - unterschiedlich dicke und breite Brillenbügel anbringbar sein.

Dies wird erfindungsgemäß dadurch erreicht,
dass das Klemmorgan im Wesentlichen aus zwei zusammenschiebbaren Profilstücken besteht,
dass an dem einen Profilstück wenigstens eine Führungsleiste und an dem anderen Profilstück wenigstens eine die Führungsleiste untergreifende Klemmleiste vorgesehen sind,
und dass die Anlagefläche zwischen der Führungsleiste und der Klemmleiste gegenüber der Längsrichtung des Brillenbügels unter einen Keilwinkel α geneigt ist.

Beim Zusammenschieben gleiten die Klemmleisten an den Führungsleisten; wegen des Keilwinkels zwischen ihnen werden die Profilstücke nicht nur in Längsrichtung des Bügels sondern gleichzeitig quer dazu bzw. zu einander verschoben, der anfängliche Abstand zwischen ihnen, also auch der Abstand zwischen den Profilstücken und dem Bügel vermindert sich, der Bügel wird zwischen den Profilstücken festgekeilt - der Clip sitzt fest am Bügel.

Noch allgemeiner gesagt ist wesentlich:
Die beiden einen Brillenbügel zwischen sich aufnehmenden Profilstücke haben je wenigstens eine zu ihrer Längsrichtung und damit zur Längsrichtung des Bügels geneigte Führung, Führungsbahn, Führungsschiene, die einander hintergreifen.

Die bzw. jede Führungsleiste oder -schiene an dem einen Profilstück drückt beim und nach dem Zusammenschieben gegen die Klemmleiste oder Klemmschiene an dem anderen Profilstück, sodass das andere Profilstück gegen den Bügel drückt und also der Bügel zwischen den beiden Profilstücken festgekeilt wird, festgeklemmt ist.

Eine Ausführungsform der Erfindung ist dadurch gekennzeichnet, dass das eine Profilstück ein U-Profilstück ist, in welches der Brillenbügel einlegbar ist und welches beidseits je eine Führungsleiste aufweist, und das andere Profilstück nach Art eines Schiebedeckels oder komplementäres Einschubkeilstück gebildet ist, der/das beidseits je eine Klemmleiste aufweist und dessen mittlerer Bereich gegen den Bügel anliegt (Anspruch 2).

Die Führungsleisten können an der Außenseite oder an der Innenseite des U-Profilstücks vorgesehen sein.

Wenn die Führungsleisten an den Außenseiten der Seitenstege des U-Profilstücks ausgebildet sind, so hat der Schiebedeckel bzw. das komplementäre Einschubkeilstück zwei seitliche Stege, an deren Innenseiten je eine Klemmleiste vorgesehen ist (Anspruch 3).

Die Führungsleisten können aber auch an den Innenseiten der Seitenstege des U-Profilstücks ausgebildet sein (Anspruch 4).

Der Schiebedeckel bzw. das komplementäre Einschubkeilstück hat hierbei die Form eines Plättchens, an dessen vom Brillenbügel abgewandten Seitenkanten die Keilflächen bzw. Klemmleisten ausgebildet sind. Oder der Schiebedeckel bzw. das Komplementärstück ist insgesamt als Keil ausgebildet.

Noch anders gesagt: Das eine Profilstück ist eine Hülse mit im Wesentlichen keilförmigem Innenraum, einer kleineren und einer größeren offenen Stirnfläche, einem Ausschnitt an der einen Breitseite zum Einlegen eines Bügels und einer Anlagefläche für den Bügel gegenüber dem Ausschnitt, wobei die inneren Ränder des Ausschnitts gegenüber der Anlagefläche unter einem Keilwinkel α geneigt sind; das andere Profilstück ist ein Keil bzw. ein Keilstück mit dem gleichen Keilwinkel, der durch die größere offene Stirnfläche hindurch zwischen die Ränder des Ausschnitts und den Bügel in die Hülse einschiebbar ist.

Zur Aufnahme von Bügeln mit konvexem Querschnitt ist wenigstens die Anlagefläche an einem der beiden Profilstücke entsprechend konkav oder hat Längsrippen, sodass der Bügel nicht nur längs einer Linie zur Anlage gelangt sondern auf größerer Breite, sodass der Federschenkel auch einer seitlichen Kraft besser widerstehen kann.

Der Schiebedeckel bzw. das Einschub-Keilstück ist vorzugsweise an dem der Klemmnase gegenüber liegenden Ende des Federschenkels ausgebildet, womit ein besonders einfacher, trotz seiner Feinheit leicht mit den Fingern anbringbarer Clip gebildet ist.

Ein Clip dieser Art, insbesondere das Klemmorgan, kann auch für andere Gebrauchsgegenstände oder Werkzeuge ausgebildet sein, z. B. auch für Schreibgeräte.

Ferner kann dieses Verbindungssystem auch zur Verbindung anderer Teile miteinander ausgebildet werden, z. B. zum Verbinden der Enden von Leisten, Stäben, Rohren, Bändern, Seilen, Kabeln. Die beiden Enden eines Stoffbandes z. B. oder zweier Bänder sind dabei in ein U-Profilstück eingelegt, darauf ist ein Klemmprofilstück oder Schiebedeckel eingeschoben; beide Profile weisen an ihren Seiten einander übergreifende Leisten oder Flügel auf, wobei die gegeneinander anliegenden Flächen der Leisten oder Flügel einen Keilwinkel mit der Längsrichtung bilden. Z. B. kann damit aus einem Gummiband ein Gummiring gemacht werden. Oder das Klemmorgan ist als Gürtelschnalle oder dergleichen oder für ein Uhr-Armband ausgebildet.

Es können auch zwei oder mehr solcher Paare von Klemm-und Führungsleisten bzw. Keilen im Abstand voneinander vorgesehen sein.

Eine Ausführungsform für relativ breite Brillenbügel ist dadurch gekennzeichnet, dass das Klemmorgan die Form einer Hülse mit einem vorzugsweise seitlichen Ausschnitt zum Durchstecken des Brillenbügels aufweist, deren Innenumfang der Querschnittsform des Bügels entspricht, wobei ein Keil zum Einstecken zwischen Hülse und Brillenbügel vorgesehen ist (Anspruch 5). Die Hülse hat dabei eine dem Keil entsprechende, zur Längsrichtung geneigte Anlagefläche.

Der Keil kann auch durch den seitlichen Ausschnitt hindurch in die Klemmstellung verschieblich sein (Anspruch 6).

Vorteilhaft kann der Keil bzw. das Einschubkeilstück an dem der Klemmnase gegenüber liegenden Ende des Federschenkels ausgebildet sein(Anspruch 7).

Der Federschenkel dient hierbei ebenfalls als Griff zum Einschieben des an seinem einen Ende angeformten Keils, das Ende des Federschenkels ist praktisch als Keil bzw. keilförmiger Schiebedeckel ausgebildet.

Ein anderes Ausführungsbeispiel ist dadurch gekennzeichnet,
dass das Klemmorgan in Form zweier den Brillenbügel zwischen sich einschließenden, quer gegen einander verschieblichen, mit ihren Seitenstegen zusammen passenden Schalen ausgebildet ist, die an ihren Seitenstegen mit wahlweise in je eine von mehreren Stellungen ineinander greifenden Rastzähne, Rastrippen oder Aufrauungen versehen sind (Anspruch 8).

Eine bessere Anpassung an verschieden dicke Brillenbügel wird hierbei dadurch erreicht, dass die Schalen breiter sind als der Brillenbügel (Anspruch 9). Moderne Brillengestelle sind oft so fein, dass der Brillenbügel keine ausreichende Klemmkraft aufnehmen kann sondern nachgibt. Um dem zu begegnen, also das Biegemoment des Federschenkels gegen den Brillenbügel zu vermeiden, weist der Federschenkel einen sich in Richtung zum Scharnier (3) erstreckenden Schenkelteil (1a') auf, an den sich hinter einer Umbiegung um 180 Grad der mit der Klemmnase (1b) versehene Schenkelteil anschließt. Die beiden Enden der Schenkelfeder greifen praktisch an der gleichen Stelle, also (fast) ohne Hebelarm an dem Bügel an (Anspruch 10).

Eine solche zweischenkelige Klemmfeder kann auch schon bei der Herstellung des Brillengestells vorgesehen werden, insbesondere einstückig an einem Brillenbügel angeformt sein.

Nachfolgend werden Ausführungsbeispiele anhand schematischer Zeichnungen näher beschrieben. Es zeigen:
- Fig. 1: in Perspektive einen Brillenbügel mit einem erfindungsgemäßen Clip im Moment der Montage,
- Fig. 2: in Ansicht aus Richtung II auf Fig. 1 eine mögliche Fingerhaltung beim Anbringen des Clips,
- Fig. 3: vergrößert den Schnitt in der Ebene III-III in Fig.1 nach dem Zusammenschieben,
- Fig. 4: die Ansicht nach Ebene IV-IV auf Fig. 3,
- Fig. 5: die Ansicht nach Ebene V-V auf Fig. 4,

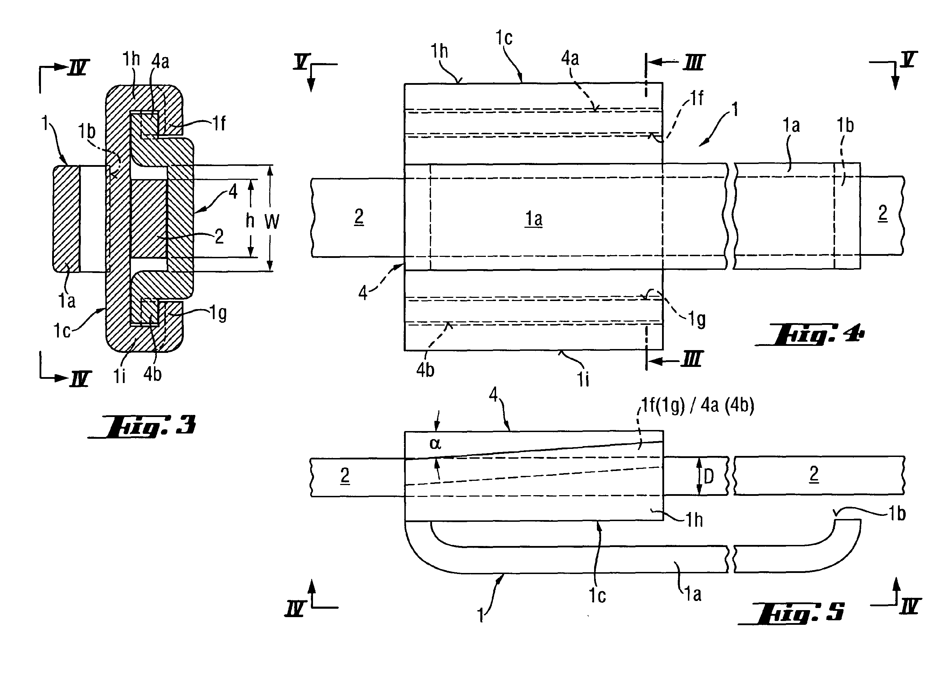

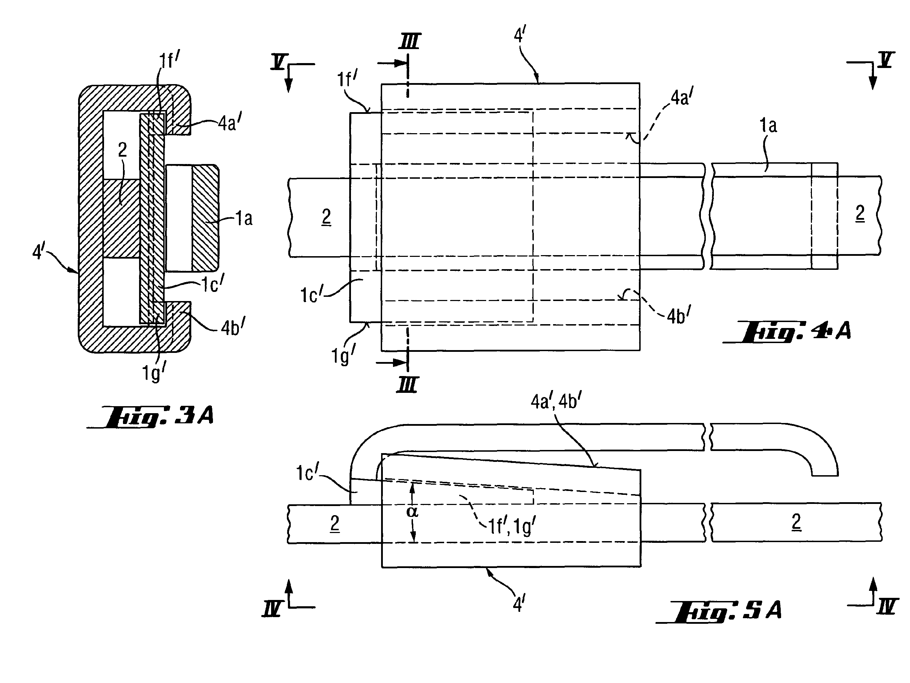

- Fig. 3A, 4A, 5A: eine Abwandlung von Fig. 3 bis 5,

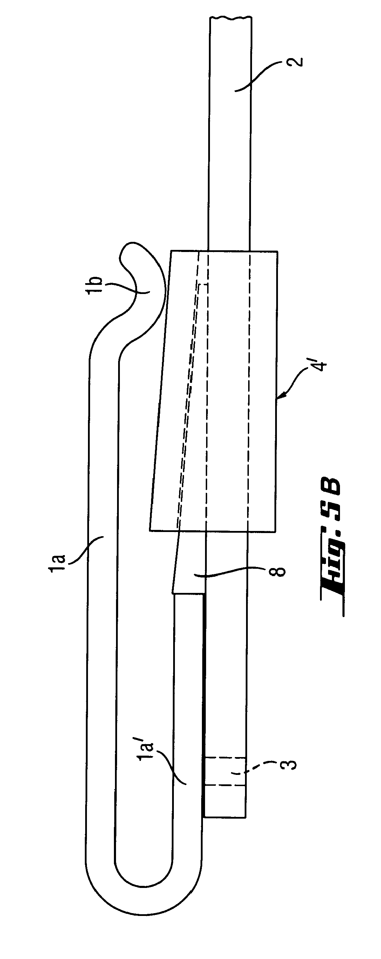

- Fig. 5B: eine Ausführung für dünne Brillenbügel gemäß Anspruch 10,

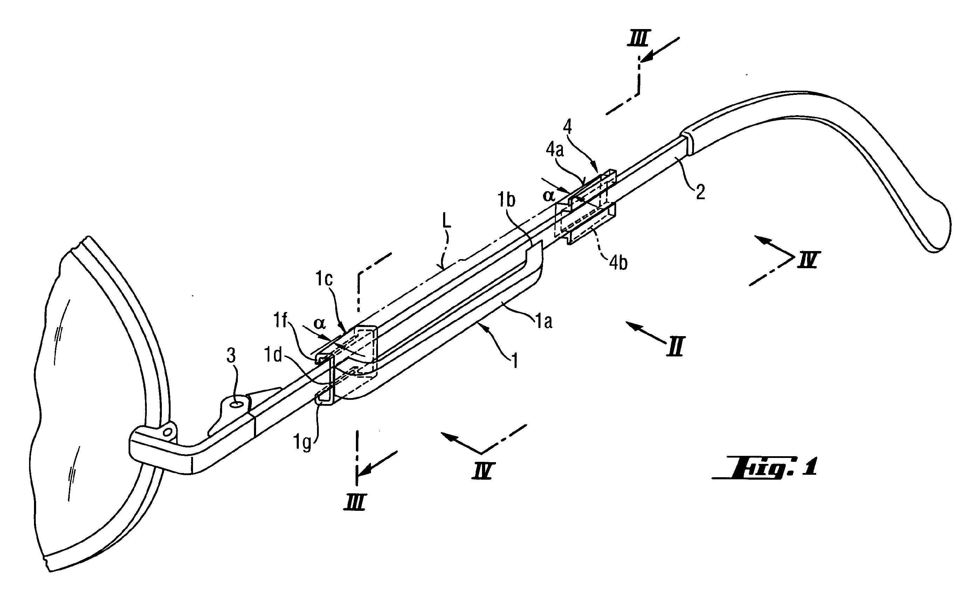

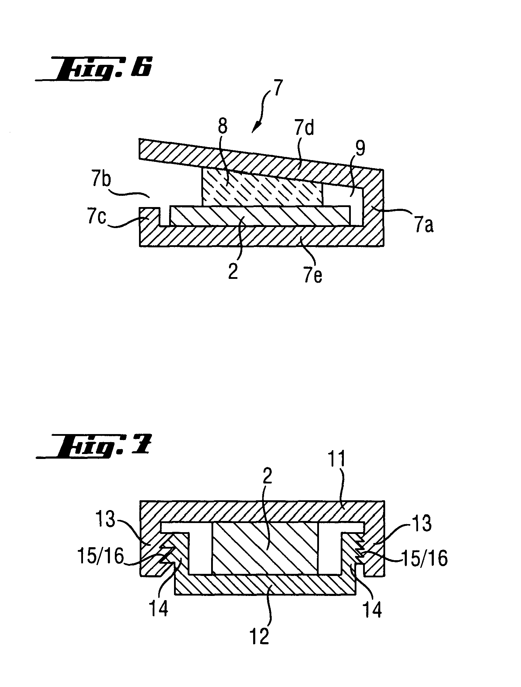

- Fig. 6 und 7: ebenfalls im Querschnitt nach der Ebene III - III in Fig. 1 Clips mit einer Klemmhülse, nämlich Fig. 6 zeigt ein Ausführungsbeispiel nach Anspruch 5, Fig. 7 zeigt ein Ausführungsbeispiel nach Anspruch 8.

Der Clip 1 besteht aus einem Federschenkel 1a und einem Klemmorgan. Der Federschenkel erstreckt sich - analog zum Clip eines Kugelschreibers - in Längsrichtung des Brillenbügels 2 und hat an seinem freien Ende eine Klemmnase 1b.

Gemäß Fig. 1 bis 5 besteht das Klemmorgan aus zwei Profilstücken 1c, 4. Die beiden Profilstücke 1c und 4 sind bei der Montage teleskopisch gegeneinander - und gegenüber dem Brillenbügel - verschieblich, und in der zusammengeschobenen Stellung schließen sie den in die Aufnahme-Ausnehmung des U-Profilstücks eingelegten Brillenbügels zwischen sich ein. Der Federschenkel 1a kann an dem einen oder an dem anderen Profilstück angebracht sein.

Das eine Profilstück ist ein U-Profilstück 4, in das der Brillenbügel 2 eingelegt wird, und an dessen Seitenstegen außen je eine Führungsleiste 4a, 4b vorgesehen sind.

Das andere Profilstück ist ein zu dem U-Profilstück 4 passendes Einschub-Keilstück 1c, ähnlich einem Schiebedeckel. Der Schiebedeckel bzw. das Einschub-Keilstück 1c hat zwei Seitenstege 1h, 1i, an deren Innenseiten je eine Klemmleiste 1f, 1g vorgesehen sind.

Um den Brillenbügel nach der Montage unverschieblich zwischen den Profilstücken festzuhalten, weisen die Anlageflächen zwischen den Führungsleisten 4a, 4b und den Klemmleisten 1f, 1g jeweils einen Keilwinkel α (Fig. 5) gegenüber der Längsrichtung L des Brillenbügels 2 auf. Dadurch wird der Clip auf dem Brillenbügel 2 festgekeilt, wobei ein und derselbe Clip 1 an Brillenbügeln 2 unterschiedlicher Dicke D festgekeilt werden kann, sofern nur der Schiebedeckel alias das Einschubkeilstück an dem Brillenbügel zur Anlage gelangt, bevor der es über seinen ganzen Verschiebeweg eingeschoben wurde. Je dünner der Bügel um so weiter wird der Keil eingeschoben. Gemäß Fig. 3 ist die Dicke des Brillenbügels gleich der Tiefe des Aufnahmeraumes des U-Profilstücks 4, der Bügel 2 wird also erst bei Ende des Einschubweges festgekeilt. Dickere Bügel werden schon vor Ende des Einschubweges festgekeilt. Der Schiebedeckel braucht nur so lang zu sein, dass er beim Festkeilen des dicksten Bügels voll eingeschoben ist, bei dünneren Bügeln wird er weiter vorgeschoben in die Klemmstellung. (Daher könnte man statt Schiebedeckel auch oder gar besser einfach Schiebestück sagen oder noch allgemeiner Komplementärstück.)

Auch können in das U-Profilstück vier unterschiedlich breite Brillenbügel 2 eingelegt werden, da die lichte Weite W des U-Profils 4 größer ist als die Breite B der kleineren Bügel 2.

Das U-Profilstück wie auch das Einschub-Keilstück können über ihre ganze Länge den gleichen Querschnitt haben, dann sind nur die aneinander anliegenden Seitenränder als Keilflächen zur Längsrichtung des Bügels geneigt; sie können aber auch als keilförmige Hülse mit einem Ausschnitt in der einen Flachseite und in die Keil-Hülse einschiebbares Keilstück ausgebildet sein, wie schon erwähnt.

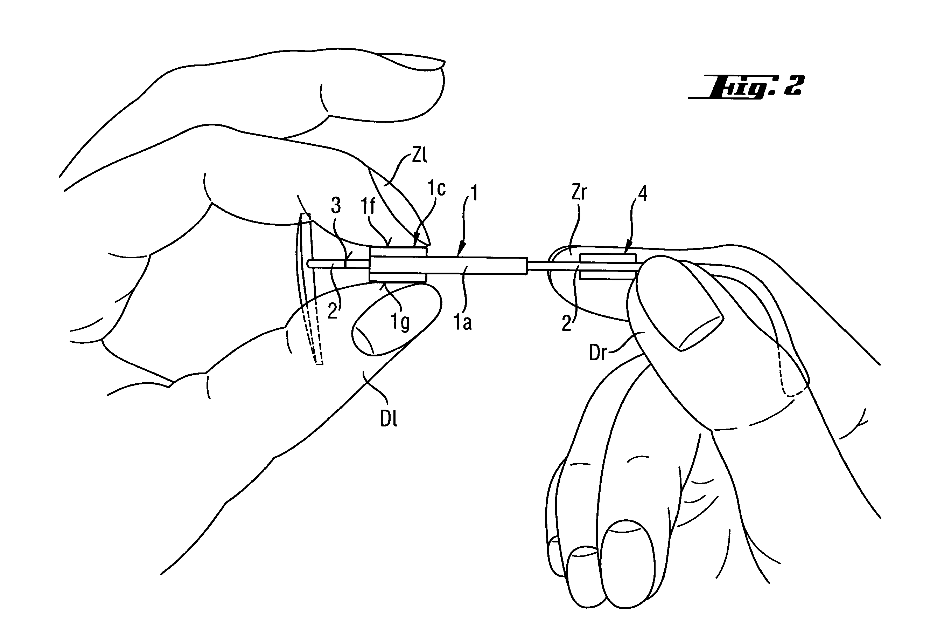

Aus dieser Raumform ergibt sich unmittelbar, wie der Benutzer den Clip an seiner Bille anbringen kann, was auch in Fig. 1 und 2 gezeigt ist:
Der Benutzer hält zwischen Zeigefinger und Daumen der rechten Hand das U-Profilstück 4 mit darin eingelegtem Brillenbügel,
während er zwischen Zeigefinger und Daumen der linken Hand den Schiebedeckel 1c mit samt dem Federschenkel 1a fasst, und zwar am besten so, dass der Zeigefinger seitlich an dem einen Seitensteg 1f und der Daumen seitlich an dem anderen Seitensteg 1g des Schiebedeckels 1c anliegt; nun richtet er den Federschenkel gegenüber dem Brillenbügel aus und schiebt beide Teile zusammen, wodurch der Clip an dem Brillenbügel festgekeilt wird. Dabei kann der Benutzer den Abstand des Clips vom Scharnier 3 nach Belieben einstellen.

Der Clip kann besonders einfach gemäß Fig. 3A, 4A, 5A ausgebildet sein: Der Schiebedeckel 1c' alias das Einschubkeilstück hat hier die Form eines Rechtecks, an dessen vom Brillenbügel 2 abgewandten Seitenkanten die Keilflächen bzw. Klemmleisten 1f', 1g' ausgebildet sind, die mit den komplementären Keilflächen bzw. Führungsleisten 4a', 4b' an den Innenseiten der beiden Stege des U-Profilstücks 4' zusammenarbeiten.

Der Federschenkel 1a ist vorzugsweise an dem Schiebedeckel 1c' alias Einschubkeilstück angebracht, sodass der Schiebedeckel / das Einschubkeilstück mittels des Federschenkels gegriffen und manipuliert, also gegen und in das U-Profilstück 4' eingeschoben werden kann. Der Federschenkel dient somit als Montage-Hilfe, sodass der Clip entsprechend zierlich sein kann, entsprechend einem modernen Brillengestell, und trotzdem ist der Clip leicht montierbar. Auch hier kann der Schiebedeckel / das Komplementärstück kürzer sein als das U-Profilstück.

Ferner ist vorgesehen, dass sich der Federschenkel 1a bis zu dem dem Scharnier 3 zugewandten Ende des Schiebedeckels 1c erstreckt. Der Schiebedeckel 1c erstreckt sich somit unter dem Federschenkel 1a, die Gesamtlänge des Clips ist also um die Länge des Schiebedeckels kürzer, als wenn sich an das Ende des Federschenkels die Länge des Schiebedeckels anschließen würde.

Gemäß Fig. 6 ist das Klemmorgan von einer keilförmigen Hülse 7 gebildet, die an einer der beiden Seitenstege 7a einen länglichen Ausschnitt 7b hat, durch den hindurch der Bügel 2 in den inneren Aufnahmeraum 9 der Hülse 7 eingeschoben werden kann; wird nun ein Keil 8 zwischen Hülse und Bügel eingeschoben, so wird der Bügel in der Hülse festgekeilt und noch dazu seitlich durch einen Steg 7c gesichert. Die (in Fig. 6) obere Flachseite 7d der Hülse - und dementsprechend der Keil 8 - sind gegenüber der unteren Flachseite 7e der Hülse quer zur Längsrichtung des Bügels 2 um einen Keilwinkel geneigt. Der Keil wird also quer zum Bügel durch den Ausschnitt hindurch eingeschoben. Entsprechend der Einschubtiefe des Keiles 8 können unterschiedlich dicke Bügel festgeklemmt werden.

Der Ausschnitt 7b und der Aufnahmeraum 9 der Hülse können so groß sein wie der dickste, größte einzuschiebende Bügel.

Fig. 7 ist ein schematischer Querschnitt durch eine Ausführungsform nach Anspruch 8. Der Bügel 2 wird in eine der beiden Schalen 11, 12 eingelegt, die andere Schale wird darüber gesetzt und beide Schalen werden gegeneinander gedrückt, wobei die beiderseitigen Rastrippen 15 / 16 gegeneinander einrasten, wodurch der Bügel zwischen den Schalen und somit der Clip an dem Bügel festgeklemmt werden.

Bisher greift die Klemmnase mit Abstand vom Klemmorgan, also mit einem Hebelarm an dem Bügel an, hierdurch können feine, flexible Brillenbügel dem Druck des Federschenkels ausweichen; um auch für diese eine stärkere, ausreichende Klemmkraft zu erreichen, kann der Federschenkel bzw. die Klemmfeder 1 sozusagen zweischenklig, als Schenkelfeder gemäß Fig. 5B geformt sein, wobei sich ein Schenkelteil 1a' weiter zu dem Scharnier 3 hin oder sogar über dieses hinaus erstreckt, woran sich mit einer Umbiegung um 180 Grad der andere Federschenkel 1a anschließt. Die Klemmnase drückt nun praktisch an der gleichen Stelle, an der der andere Schenkel angreift bzw. an der das Klemmorgan angreift, also ohne Biegemoment. Auch kann die Brille tiefer in eine Brusttasche versenkt werden.

Vorzugsweise sind an den Enden der Profilstücke Abschrägungen zur Erleichterung des Einschiebens vorgesehen.

### Bezugszeichenliste

- 1: Clip
- 1a: Federschenkel
- 1a': Schenkelteil
- 1b: Klemmnase
- 1c: Schiebedeckel, Einschubkeilstück
- 1c': Schiebedeckel, Einschubkeilstück (Fig. 3A)
- 1f: Klemmleiste
- 1f': Klemmleiste
- 1g: Klemmleiste
- 1g': Klemmleiste
- 1h: Seitensteg
- 1i: Seitensteg
- 2: Brillenbügel
- 3: Scharnier
- 4: U-Profilstück
- 4a: Führungsleiste
- 4b: Führungsleiste
- 4': U-Profilstück
- 4a': Führungsleiste
- 4b': Führungsleiste
- α: Keilwinkel
- D: Dicke des Brillenbügels 2 in Fig. 5
- L: Längsrichtung
- W: lichte Weite des U-Profils 4 in Fig. 3
- B: Breite des Brillenbügels 2 in Fig. 3
in Fig. 2 :
- Dr: Daumen rechts
- Zr: Zeigefinger rechts
- D1: Daumen links
- Z1: Zeigefinger links

- 7: Hülse
- 7a: Seitensteg
- 7b: Ausschnitt
- 7c: Steg
- 7d: obere Flachseite
- 7e: untere Flachseite
- 8: Keil

- 11, 12: Schalen
- 13, 14: Seitenstege
- 15, 16: Rastrippen

## Patentansprüche

1. Clip, vorzugsweise für Brillen, mit einem sich über einen der beiden Brillenbügel erstreckenden Federschenkel und einem den Brillenbügel umfassenden Klemmorgan, **dadurch gekennzeichnet, dass** das Klemmorgan im Wesentlichen aus zwei zusammenschiebbaren Profilstücken besteht, zwischen deren einander zugekehrten Innenflächen ein Brillenbügel aufnehmbar ist,
dass an dem einen Profilstück wenigstens eine Führungsleiste (4a, 4b) und an dem anderen Profilstück wenigstens eine die Führungsleiste untergreifende Klemmleiste (1f, 1g) vorgesehen sind, und dass die Anlagefläche zwischen je einer Führungsleiste (4a, 4b) und je einer Klemmleiste (1f, 1g) gegenüber der Längsrichtung wenigstens einer der beiden Innenflächen unter einem Keilwinkel α geneigt ist.

2. Clip nach Anspruch 1, **dadurch gekennzeichnet, dass** das eine Profilstück ein U-Profilstück (4) ist, in welches der Brillenbügel (2) einlegbar ist und welches beidseits je eine Führungsleiste (4a,4b) aufweist,
und dass das andere Profilstück als Einschubkeilstück nach Art eines Schiebedeckels (1c; 1c') gebildet ist, der beidseits je eine Klemmleiste (1f, 1g) aufweist, und dessen mittlerer Bereich gegen den Bügel anliegt.

3. Clip nach Anspruch 2, **dadurch gekennzeichnet, dass** die Führungsleisten (4a, 4b) an den Außenseiten des U-Profilstücks (4) ausgebildet sind und das Einschubkeilstück (1c) zwei seitliche Stege (1h, 1i) aufweist, an deren Innenseiten je eine Klemmleiste (1f, 1g) vorgesehen sind.

4. Clip nach Anspruch 3, **dadurch gekennzeichnet, dass** die Führungsleisten (4a', 4b') an den Innenseiten der Seitenstege des U-Profilstücks (4') ausgebildet sind.

5. Clip nach Anspruch 1, **dadurch gekennzeichnet, dass** das eine Profilstück im Wesentlichen eine keilförmige Hülse (7) ist, die einen seitlichen Ausschnitt (7b) zum Durchstecken des Brillenbügels aufweist, und das andere Profilstück ein Keil (8) bzw. Keilstück zum Einstecken zwischen der Hülse und dem Brillenbügel ist.

6. Clip nach Anspruch 5, **dadurch gekennzeichnet, dass** der Keil(8) durch den seitlichen Ausschnitt (7b) hindurch in die Betriebsstellung verschieblich ist.

7. Brillenclip nach einem der Ansprüche 2 bis 6, **dadurch gekennzeichnet, dass** das Einschubkeilstück bzw. der Keil (8) an dem der Klemmnase (1b) gegenüber liegenden Ende des Federschenkels ausgebildet ist.

8. Clip nach Anspruch 1, **dadurch gekennzeichnet, dass** das Klemmorgan (1b) in Form zweier den Brillenbügel (2) zwischen sich einschließenden, quer gegen einander verschieblichen, mit ihren Seitenstegen (13, 14) zusammen passenden Schalen (11, 12) ausgebildet ist, die an ihren Seitenstegen mit wahlweise in je eine von mehreren Stellungen ineinander greifenden Rastzähnen, Rastrippen (15, 16) oder mit Aufrauungen versehen sind.

9. Clip nach Anspruch 8, **dadurch gekennzeichnet, dass** die Schalen (11, 12) breiter sind als der Brillenbügel.

10. Clip vorzugsweise nach wenigstens einem der vorhergehenden Ansprüche,**dadurch gekennzeichnet, dass** der Federschenkel einen sich in Richtung zum Scharnier (3) erstreckenden Schenkelteil (1a') aufweist, an den sich hinter einer Umbiegung um 180 Grad der mit der Klemmnase (1b) versehene Schenkelteil anschließt.
